(19) Europäisches Patentamt
European Patent Office
Office européen des brevets

(11) **EP 4 176 370 B1**

(12) **EUROPEAN PATENT SPECIFICATION**

(45) Date of publication and mention
of the grant of the patent:
**11.03.2026   Bulletin 2026/11**

(21) Application number: **20761752.3**

(22) Date of filing: **05.08.2020**

(51) International Patent Classification (IPC):
**G06F 40/279** *(2020.01)*      **G06F 40/30** *(2020.01)*

(52) Cooperative Patent Classification (CPC):
**G06F 40/279; G06F 40/30**

(86) International application number:
**PCT/EP2020/072042**

(87) International publication number:
**WO 2022/028692 (10.02.2022 Gazette 2022/06)**

(54) **ENHANCEMENT OF BOOTSTRAPPING FOR INFORMATION EXTRACTION**

BOOTSTRAPPING-VERBESSERUNG ZUR INFORMATIONSEXTRAKTION

AMÉLIORATION D'AMORÇAGE POUR EXTRACTION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.05.2023   Bulletin 2023/19**

(73) Proprietor: **DRIMCO GmbH
81829 München (DE)**

(72) Inventor: **GUPTA, Pankaj
81379 München (DE)**

(74) Representative: **Bratovic, Nino Maria
Bratovic IP
Lissi-Kaeser-Straße 20
80797 München (DE)**

(56) References cited:
**CN-A- 108 875 809      CN-A- 111 241 241
US-A1- 2018 082 183**

**Description**

Field of the Invention

Information extraction is one of the key techniques of Natural Language Processing that identifies and extracts relevant information hidden in large industrial corpora as well from the plethora of data available on internet. The relevant information is particularly hidden in unstructured form of text, for example in text documents, blogs, service reports, tenders, specification documents, standardization documents, etc.

Information extraction engine has two major components: Entity Extraction (detecting entities such as person, organization location, products, technologies, etc.) and Relation Extraction (detecting relationship between pairs of nominals or entities such as supplier-of, acquired-by, etc.).

Particularly, Relationship Extraction (RE) transforms unstructured text into relational triples, each representing a relationship between two named-entities. To expand a set of initial seed relationships, a bootstrapping technique can be utilized. In other word, the objective of bootstrapping is to expand the seed set with new relationship instances.

However, these bootstrapping approaches often experience with semantic drift problems due to lack of labeled data, where the target semantics "drift" due to no supervision. Semantic drift means the progressive deviation of the semantics for the extracted relationships from the semantics of the seed relationships. For instance, a user bootstraps the system to extract all fact (subject-relationship-object) for 'acquired' relationship using seed <Siemens AG, Acquired, Mendix>. The information extraction system also extracts a triple <Siemens AG, Said-to, Mendix>, because those two entities factually have this relationship. In this case, the information extraction system incorrectly marks the triple, which includes 'Said-to' relationship, to be recognized as the 'acquired' relationship. However, the information extraction system cannot distinguish that the instance does not possess 'acquired' relationship due to no data annotation at the instance level.

Therefore, it may be required to reduce and control the semantic drift and noise propagation iteratively in bootstrapping for relation extraction in order to precisely extract relevant information underlying in the large-scale unstructured industrial corpora and web.

Background of the invention

In Salton and Berkely et al., "Term-weighting approaches in automatic text retrieval", Information Processing and Management, 1988 (hereafter cited as "Salton and Berkely et al."), expanding seed set by relying on TF-IDT, term frequency-inverse document frequency, is described. However, such approach has limitations, since the similarity between any two relationship instance vectors of TF-IDF weights is only positive when the instances share at least one term. For instance, the phrases "was founded by" and "is the co-founder of" do not have any common words, but they have the same semantics (or: meaning).

In Brin et al., "Extracting Patterns and Relations from the World Wide Web", Selected Papers from the International Workshop on The World Wide Web and Database, 1999 (hereafter cited as "Brin et al."), DIPRE generating extraction patterns by grouping contexts based on string matching is described, which controls semantic drift by limiting the number of instances.

In Agichtein and Gravano et al., "Snowball: Extracting Relations from Large Plain-Text Collections", Processings of the ACM Conference on Digital Libraries, 2000 (hereinafter cited as "Gravano et al."), a bootstrapping having the processing phases: find seed matches, generating extraction patterns, finding relationship instances, and detecting semantic drift is described.

In Gupta et al, "Joint Bootstrappong Machines for High Confidence Relation Extraction", NAACL 2018 (hereinafter cited as "Gupta et al."), semi-supervised approaches to extract relevant information via bootstrapping approaches using very few data annotations is described.

In Jacob Devlin et al, "BERT: Pre-training of Deep Didirectional Transformers for Language Understanding" NAACL 2019, a language model is describe.

In Liu et al, "RoBERTa: A Robustly Optimized BERT Pretraining Approach", 2019, a language model is described.

In Petroni et al, "Language Models as Knowledge Based?", EMLP 2019, a language model is described.

US 2018/082183 A1 discloses a method for information extraction and techniques for identifying and measuring entity relationships and associations.

Summary of the Invention

The invention is set out in the appended set of claims.

Accordingly, it is one of the objectives of the present invention to provide a method and system for enhancing reliability of bootstrapping for information extraction. Accordingly, a computer-implemented method for enhancing reliability of bootstrapping for information extraction, IE, comprising at least the steps of:

> performing relation extraction, RE, to acquire a seed instance including a pair of entities and relationship information between the pair of entities;
> finding seed occurrences which match to the seed instance in a document collection;
> generating a set of extraction patterns corresponding to the relationship information by clustering the seed occurrences, wherein each of the extraction patterns is mapped to one of clusters of the seed occurrences;
> generating a graph which represents similarity between the extraction patterns based on word embedding vectors for each of the extraction patterns;
> identifying at least one noisy extraction pattern among the set of the extraction patterns based on the similarity and a pre-defined threshold; and
> rectifying the set of extraction patterns by removing the identified noisy extraction pattern from the graph..

In some advantageous embodiments, variants, or refinements of embodiments, the word embedding vectors for each extraction pattern are generated based on a sum of results of embedding all words before the pair of entities, between the pair of entities, and/or after the pair of entities of seed occurrences included in a corresponding cluster in the document collection.

In some advantageous embodiments, variants, or refinements of embodiments, the graph is a spanning tree including the extraction patterns connected by edges which does not configure a closed loop.

In some advantageous embodiments, variants, or refinements of embodiments, a length of each edge in the spanning tree is proportional to a similarity value of two extraction patterns which are connected by said edge.

In some advantageous embodiments, variants, or refinements of embodiments, the step of identifying includes, if an extraction pattern has a similarity value to a neighbor extraction pattern connected to the extraction pattern which is below the pre-defined threshold, deciding that the extraction pattern is a noisy extraction pattern. In this way, only the extraction patterns with strong similarities or correlations remain so that semantic drift by, for example, a chain of only loosely similar patterns is avoided. For example, in some context, "A bought B" means (in colloquial language) that "A believes a lie B that was told to A" instead of "A acquired B". In turn, to this meaning "A believed B" would be similar. So the bootstrapping might find similarities between "A acquired B" and "A bought B", and then from "A bought B" to "A believed B" and so on, as an example for semantic drift. However, since the meaning "A acquired B" for "A bought B" is much more common than "A believed B", the similarity value would be low and the semantic drift can be prevented by identifying "A believed B" as a noisy pattern.

In some advantageous embodiments, variants, or refinements of embodiments, the step of identifying includes, if an extraction pattern has an average of similarity values to at least two neighbor extraction patterns connected to the extraction pattern which is below the pre-defined threshold, deciding that the extraction pattern is a noisy extraction pattern. In this way, again, only extraction patterns with generally high similarities to other extraction patterns remain. Similarly to above, this prevents semantic drift by isolated (semantic) chains of loosely similar patterns. In this way, again, only extraction patterns with generally high similarities to other extraction patterns remain. Similarly to above, this prevents semantic drift by isolated (semantic) chains of loosely similar patterns.

In some advantageous embodiments, variants, or refinements of embodiments, the step of identifying includes, if an extraction pattern has a maximum of similarity value to neighbor extraction patterns connected to the extraction pattern which is below the pre-defined threshold, deciding that the extraction pattern is a noisy extraction pattern. The noisy extraction patterns may be pruned (i.e. removed) from the graph.

In some advantageous embodiments, variants, or refinements of embodiments, the step of identifying further includes, if the extraction pattern has a maximum of similarity value to a neighbor extraction pattern which is above the pre-defined threshold, and if the extraction pattern has a similarity value to a neighbor extraction pattern which is below the pre-defined threshold, removing an edge corresponding to the similarity value below the pre-defined threshold.

In some advantageous embodiments, variants, or refinements of embodiments, further comprising:

> comparing a candidate instance corresponding to a specific extraction pattern included in the rectified set with a word, which is predicted by a language model, LM, based on a portion of the candidate instance; and
> determining that the specific extraction pattern has same semantics as the relationship information of the seed instance in case the word predicted by the LM matches to another portion of the candidate instance.

In some advantageous embodiments, variants, or refinements of embodiments, the word predicted by LM is at least one of:

- a first entity of the candidate instance,
- a second entity of the candidate instance, and/or

the specific extraction pattern corresponding to the candidate instance.

In some advantageous embodiments, variants, or refinements of embodiments, the step of determining includes deciding that the word predicted by the language model, LM, matches to another portion of the candidate instance in case a type of the word predicted by the LM is identical to a type of another portion of the candidate instance. The type of word (i.e. a word predicted by LM or another portion of the candidate instance) may be a category including a plurality of words. That is, the type may be a superordinate concept which includes a certain category of words. The type may be defined based on meanings of the words. For example, the type of words may be a product, an organization, technology, etc.

In some advantageous embodiments, variants, or refinements of embodiments, the language model, LM, is pre-trained by unstructured corpora such that the LM is equipped with a function of predicting the word based on the portion of the candidate instance.

The invention also provides, according to a second aspect, an apparatus configured to perform the method according to any embodiment of the first aspect of the present invention. The apparatus may in particular comprise an input interface, a computing device and an output interface.

The computing device may be realized in hardware, such as a circuit or a printed circuit board and/or comprising transistors, logic gates and other circuitry. Additionally, the computing device may be at least partially realized in terms of software. Accordingly, the computing device may comprise, or be operatively coupled to, a processor (one or more CPUs and/or one or more GPUs and/or one or more ASICs and/or one or more FPGAs), a working memory and a non-transitory memory storing a software or a firmware that is executed by the processor to perform the functions of the computing device. Signals may be received by the input interface and signals that the processor of the computing device creates may be outputted by the output interface. The computing device may be implemented, at least partially, as a microcontroller, an ASIC, an FPGA and so on.

The invention further provides, according to a third aspect, a non-transitory computer-readable data storage medium comprising executable program code configured to, when executed by a computing device, perform the method according to any embodiment of the first aspect.

The invention also provides, according to a fourth aspect, a computer program product comprising executable program code configured to, when executed by a computing device, perform the method according to any embodiment of the first aspect.

The invention also provides, according to a fifth aspect, a data stream comprising, or configured to generate, executable program code configured to, when executed by a computing device, perform the method according to any embodiment of the first aspect.

Brief description of the drawings

The invention will be explained in yet greater detail with reference to exemplary embodiments depicted in the drawings as appended.

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

The numbering of method steps is intended to facilitate understanding and should not be construed, unless explicitly stated otherwise, or implicitly clear, to mean that the designated steps have to be performed according to the numbering of their reference signs. In particular, several or even all of the method steps may be performed simultaneously, in an overlapping way or sequentially.

Fig. 1 shows a schematic flow diagram illustrating a computer-implemented method according to the first aspect of the present invention;

Fig. 2 shows a schematic flow diagram illustrating a computer-implemented method according to the first aspect of the present invention;

Fig. 3 shows a schematic flow diagram illustrating a computer-implemented method according to the first aspect of the present invention;

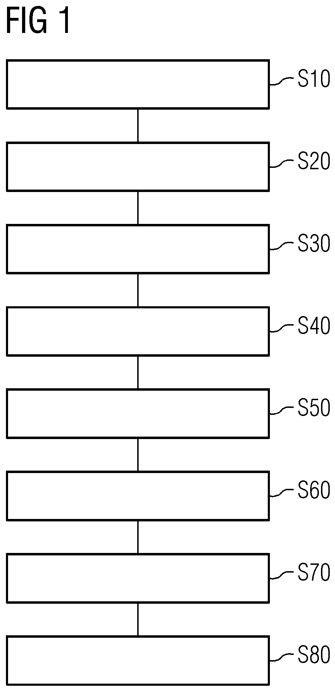

Fig. 4, Fig. 5 and Fig. 6
schematically illustrate further details of the method according to Fig. 1;

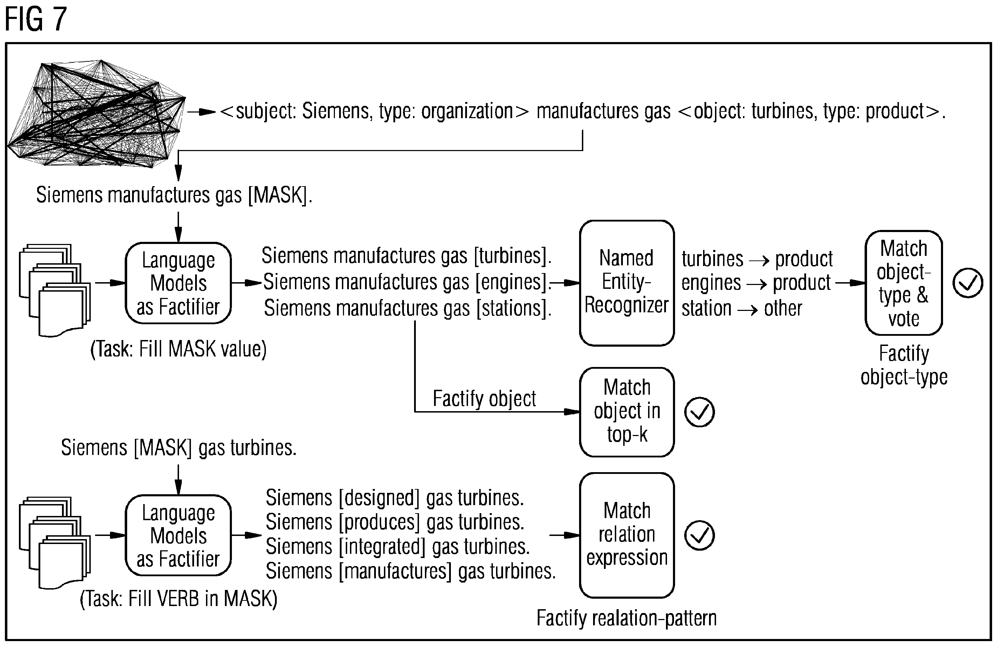

Fig. 7 shows a schematic flow diagram illustrating a computer-implemented method according to the first aspect of the present invention

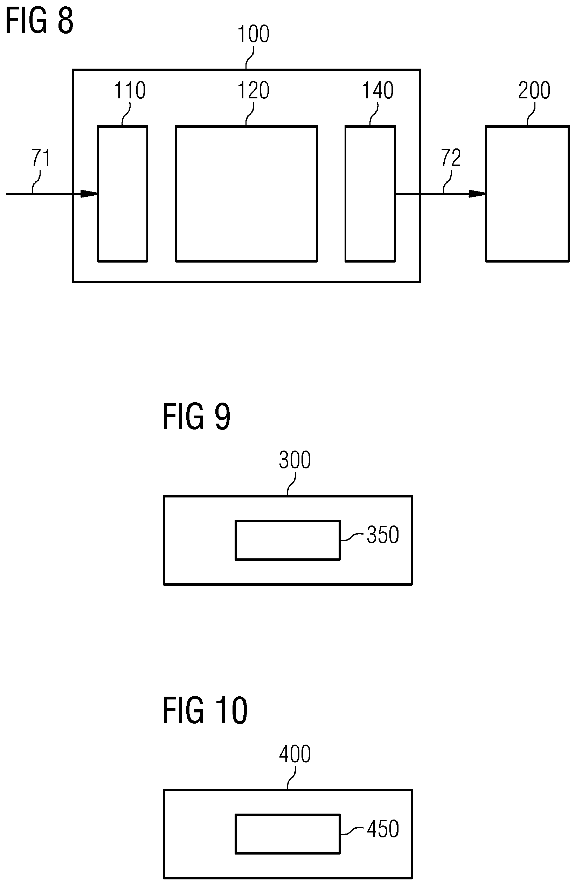

Fig. 8 shows a block diagram schematically illustrating an apparatus according to an embodiment of the second aspect of the present invention;

Fig. 9 shows a block diagram schematically illustrating a computer program product according to an embodiment of the third aspect of the present invention; and

Fig. 10 shows a block diagram schematically illustrating a data storage medium according to an embodiment of the fourth aspect of the present invention.

Detailed Description of the invention

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Fig. 1 shows a schematic flow diagram illustrating a computer-implemented method according to the first aspect of the present invention, i.e. a computer-implemented method for enhancing reliability of bootstrapping for information extraction. The method will be described using the English language for examples. However, it will be evident that the same method may be applied to any other language as well, for example to Chinese, Hindustani, Spanish, Arabic, Malay, Russian, Bengali, Portuguese, French, German, Japanese, and so on.

In step S10, a relation extraction, RE, is performed to acquire a seed instance. The RE transforms unstructured text into relational triples, each representing a relationship between two named-entities. That is, RE acquires a seed instance which includes a pair of entities, and relationship information between the pair of entities. An entity in this sense may be, for example, one of a person, organization, location of the organization, products, technologies, etc. One of the pair of entities may be a subject, and the other of the pair of entities may be an object. In this disclosure, the entity may be also referred to as a nominal. The relationship information may be a relationship between pairs of nominals or entities, such as supplier-of, acquired-by, etc. In the present disclosure, the relationship information may be also referred to as relation, relationship, relation-pattern or relation-expression. RE may attempt to find similar relationships using word embedding.

In step S20, seed occurrences which match to the seed instance are searched and found in a document collection. The seed occurrences may be also referred to as seed match or occurrences contexts. The seed occurrence may be regarded as being matched to the seed instance when the seed occurrence includes a pair of entities of the seed instance.

More specifically, the document collection may be scanned and, if the pair of entities of the seed instance co-occurs in a text segment within a sentence, then that text segment may be configured into three textual contexts which are extracted as: words before the first entity (BEF), words between the two entities (BET), and words after the second entity (AFT). A new instance extracted from a sentence that includes seed occurrence may be referred to as relationship instance. Thus, a specific relationship instance matches to a specific seed occurrence.

As describe above, a relationship instance i is represented by three embedding vectors: $V_{BEF}$, $V_{BET}$, and $V_{AFT}$.

Considering the sentence:

*The tech company* Soundcloud *is based in* Berlin, *capital of Germany.*

The relationship instance i may be generated with:

$$V_{BEF} = E(\text{``tech''}) + E(\text{``company''})$$

$$V_{BET} = E(\text{``is''}) + E(\text{``based''})$$

$$V_{AFT} = E(\text{``capital''})$$

where, E(x) is the word embedding for word x.

In this disclosure, the document collection may be a set of documents included in large-scale unstructured industrial corpora and/or web. The documents may be a combination of texts from different corpora and/or web.

In step S30, a set of extraction patterns is generated. A set of extraction patterns corresponds to the relationship information of seed instance. The set of extraction patterns may include various expressions which has identical (or similar) semantics to the relationship information of seed instance. However, in this step, the set of extraction patterns may also include at least one other expression which does not belong to identical (or similar) semantic category of the relationship information of seed instance. This other expression may be referred to as noisy extraction pattern as described below. Thus, the set of extraction patterns corresponding to the relationship information may be a set of candidate extraction patterns to be regarded as identical (or similar) to the relationship information of seed instance.

A set of extraction patterns is generated by clustering the seed occurrences. The seed occurrences may be clustered into a plurality of clusters. The clustering seed occurrences may be performed based on relationship instances which are extracted from each of seed occurrences. As described above, each of relationship instances may be extracted from a seed occurrence. That is, a specific relationship instance may correspond to a specific seed occurrence.

The clustering may be performed by a single-pass clustering algorithm. The single-pass clustering algorithm takes as input a list of relationship instances and assigns the first relationship instance to a new empty cluster. Next, the single-pass clustering algorithm iterates through the list of relationship instances, computing the similarity between an instance $i_n$ and every cluster $Cl_j$. The relationship instance $i_n$ is assigned to the first cluster whose similarity is higher or equal to a threshold $\tau_{sim}$. If all the clusters have a similarity lower than a threshold $\tau_{sim}$, a new cluster $C_m$ is created, containing the relationship instance $i_n$. The similarity function $Sim(i_n, Cl_j)$, between an instance $i_n$ and a cluster $Cl_j$, returns the maximum of the similarities between a relationship instance $i_n$ and any of the relationship instances $i_n$ a cluster $Cl_j$, if the majority of the similarity scores is higher than a threshold $\tau_{sim}$. A value of zero is returned otherwise.

Each of extraction patterns is mapped to one of clusters of seed occurrences. Each of extraction patterns are represented by respective word embedding vectors. The word embedding vectors for each of extraction patterns are generated based on a sum of embedding of all words in before, BEF, a pair of entities, between, BET, the pair of entities, or after, AFT, the pair of entities of seed occurrences which form a cluster mapped to said extraction pattern in the document collection. Alternatively, the word embedding vector of an extraction pattern is generated by averaging the sum of word embedding in BEF, BTW and/or AFT for all seed occurrences which form a specific cluster corresponding to the extraction pattern. In other words, for each of the extraction patterns, a representation (word embedding vector) may be generated by averaging and/or summing embeddings of all words in BEF, BET or AFT context with/without removing stopwords for each of the relationship instances included a cluster.

Thus, according to an example of the present disclosure, extraction patterns may be generated based on clustering relationship instances, such that each cluster may contain a set of relationship instances. Also, the extraction pattern may be represented by a centroid of the vectors that form a cluster.

In step S40, a graph which represents similarity between the extraction patterns is generated. The graph is generated based on word embedding vectors for each of the extraction patterns.

In this graph, each node represents one of the extraction patterns, and each edge connecting two of extraction patterns represents similarity of the connected two extraction patterns. According an embodiment of the present disclosure, a length of each edge is proportional to the similarity value of two extraction patterns connected by the corresponding edge. The graph may include extraction patterns represented by nodes, and extraction patterns are connected by a plurality of edges which does not configure a closed loop.

In this disclosure, the graph may be a spanning tree. The spanning tree is a connected undirected graph with no cycles. It is a spanning tree of a graph G if it spans G (that is, it includes every vertex of G) and is a subgraph of G (every edge in the tree belongs to G). A spanning tree of a connected graph G may also be defined as a maximal set of edges of G that contains no cycle, or as a minimal set of edges that connect all vertices. The spanning tree may be computed based on Kruskal's algorithm. The Kruskal's algorithm is a greedy algorithm of graph theory for computing the spanning trees of undirected graphs. The graph is also connected, edge-weighted and finite. An undirected graph G may be computed, where each node u represents an extraction pattern, while the edge (u, v) is weighted by similarity between extraction patterns u and v. Then it may compute the spanning tree of the graph G based on the similarity weights.

In step S50, at least one noisy extraction pattern among the set of the extraction pattern is identified. "Noisy extraction pattern" here means in particular an extraction pattern which does not belong to a same (or similar) semantic class of relationship information of the seed instance. The noisy extraction pattern is identified based on the similarity between the extraction patterns and a predetermined threshold.

According to an embodiment of the present disclosure, if a specific extraction pattern has a similarity value to a neighbor extraction pattern connected to the specific extraction pattern which is below the pre-defined threshold, it is determined that the specific extraction pattern is the noisy pattern. The specific extraction pattern may be deleted.

According to another embodiment, if a specific extraction pattern has an average of similarity values to at least two neighbor extraction patterns connected to the specific extraction pattern which is below the pre-defined threshold, it is determined that the specific extraction pattern is the noisy pattern. The specific extraction pattern may be deleted.

According to another embodiment, if a specific extraction pattern has a maximum of similarity value to at least two neighbor extraction patterns connected to the specific extraction pattern which is below the pre-defined threshold, it is determined that the specific extraction pattern is the noisy pattern. The specific extraction pattern may be deleted. In this embodiment, if a specific extraction pattern has a maximum of similarity value to at least two neighbor extraction patterns connected to the specific extraction pattern which is above the pre-defined threshold, and the specific extraction pattern has a similarity value to a neighbor extraction pattern connected to the specific extraction pattern which is below the pre-defined threshold, an edge corresponding to the similarity value below the pre-defined threshold is removed.

In step S60, the set of extraction patterns is rectified by removing the identified noisy extraction pattern. The noisy extraction pattern may be deleted from the graph.

Meanwhile, algorithm 1 and 2 describes extraction pattern rectifying procedure. In this disclosure, the rectifying procedure may be referred to as a pruning procedure. The motivation is to identify noisy-high-confidence (NHC) extraction patterns, e.g. noisy extraction patterns, and prune them via odd-one-out puzzle style to control and minimize semantic drift. The basic idea is to compute the density of each node and filter-out/prune the node(s) from the spanning tree that are not dense 'enough', like anomaly detection or odd-one-out selection approach. In the present disclosure, the extraction pattern pruning procedure may consist of steps S40, S50 and S60.

[Algorithm 1]

```
NHC Patterns Detection
Input: Λ
1: Compute representation of each of the high confidence patterns
```

```
by averaging all words (of BET context) of the instance(s) within
each pattern
```
$$\Lambda_{emb} = \{avgemb(\lambda)|\lambda \in \Lambda \wedge \lambda_{conf} >= \tau_{conf}\}$$
```
2: Construct a complete graph G (pattern graph), where the nodes
are patterns and edges are weighted with similarity scores.
```
$$G(u,v) = completeGraph(\Lambda_{emb})$$
```
3: Construct the maximum spanning tree (MST) using Kruskal's
algorithm.
```
$$G_{MST} = findSpanningTree\,(G, Kruskal)$$
```
4: Prune nodes in the MST
```
$$G_p = pruneMST\,(G_{MST}, \tau_{prun}, strategy)$$
```
5: return pattern(s) in the graph after pruning.
```
$$return\,\{\lambda|\lambda \in G_p\}$$

[Algorithm 2]

```
Prune Nodes in MST
    Input: G_MST, τ_prun
    Input: strategy={pruneLeaf, pruneNodeAvg, pruneNodeMin}
function NORM {G}
    for u, v ∈ G.edges() do
```
$$G[u][v] = 1 - \frac{maxWeight - G[u][v]}{maxWeight}$$
```
    Return G
function PRUNEMST (G_MST, τ_prun, strategy)
    G= norm(G_MST)
    for u ∈ G.nodes() do
        if pruneLeaf and degree(u) = 1 then
            if u ∈ G.nodes()  then
                G.deleteNode(u)
        if pruneNodeAvg then
            if avg(G[u][:]) <= τ_prun  then
                G.deleteNode(u)
if pruneNodeMin then
            if max(G[u][:]) <= τ_prun  then
                G.deleteNode(u)
            else
                for v ∈ G.nodes() and v ≠ u do
                    if G[u][v] <= τ_prun  then
```

```
    G.deleteEdge(u, v)
    return G
```

Following is example of strategies to prune/select at least one of the noisy extraction pattern(s):

- Strategy=pruneLeaf: Find the least edgedweighted leaf node, and prune it if the weight is below the certain pruning threshold, τprun.
- Strategy=pruneNodeAvg: Compute node density by avgpweights1:Cq, where is C is the number of edges n is connected to. Prune the node n, if the average score is below τprun.
- Strategy=pruneNodeMin: Delete all edges connected to u for which edge weights are below τprun.

The strategies described above may be not only taken alone, but also taken in combination.

According to the present disclosure, the bootstrapping may be performed based on combination of steps S10-S60. In this case, determination of whether an extraction pattern has a same semantics as the relationship information of seed instance may be performed based on the rectified set of extraction patterns. In other words, if an extraction pattern is still remained in the graph after rectifying the set of extraction pattern, the extraction pattern may be considered as same semantic of relationship information of seed instance. Or, extraction patterns included in rectified set may be regarded as same semantic of relation information of seed instance.

However, according to an embodiment of the present disclosure, further procedures may be performed for determination procedure to determine whether an extraction pattern has a same semantics as the relationship information of seed instance. Hereinafter, the optional procedures are described.

In step S70, a candidate instance corresponding to a specific extraction pattern included in the rectified set is compared with a word predicted by a language model, LM, based on a portion of the candidate instance.

The candidate instance means an instance that is found on document collection based on extraction pattern. The candidate instance may be configured in form of triple, e.g. subject, relationship information and object, and the relationship information. The relationship information included in the candidate instance may correspond to an extraction pattern.

The rectified set may be a set of extraction pattern with extraction pattern pruning procedure. Thus, noisy extraction pattern is not included in the rectified set of extraction patterns.

The LM in the present disclosure is pre-trained by unstructured corpora such that the LM is equipped with a function of predicting the word based on the portion of the candidate instance.

More specifically, the LM may predict a word based on a sentence including a portion of the candidate instance. The portion of the candidate instance means a candidate instance with a missing element. The missing element may be related to at least one of the pair of entities or relationship information. That is, the sentence may have a missing word, so that the LM predicts the missing word based on the rest of the words in the sentence. Thus, the missing word, e.g. the predicted word may be at least one word included in one of the pair of entities or relation information between the pair of entities.

In the present disclosure, the LM may be Bidirectional Encoder Representations from Transformers (BERT), which is a technique for NLP (Natural Language Processing) pre-training developed by Google. Also, the LM may be RoBERT language model enhanced based on BERT. However, Lm in the present disclosure is not limited to a specific model.

In step S80, it is determined that the specific extraction pattern has the same semantics as the relationship information of the seed instance in case the predicted word by the LM matches to another portion of the candidate instance. Another portion of the candidate instance may be the missing element of the candidate instance. It is determined that the predicted word matches to another portion of the candidate instance, when a type of the predicted word is identical to a type of another portion of the candidate instance. The type may be one of the types of entities included in instances. The type of words (a word predicted by LM or a missing element) may be a category including a plurality of words. That is, the type may be a superordinate concept which includes a certain category of words. The type may be defined based on meanings of the words. For example, the type of words may be a product, an organization, technology, etc.

Meanwhile, the steps S70 and S80 described above may be referred to as a verifying procedure. In verifying whether a candidate instance belong to same semantic class to the seed instance, a large-scale pre-trained language model as knowledge bases may be used since they have abilities to encode unstructured information as factual knowledge.

The verifying procedure may determine if the factual knowledge encoded in a candidate instance aligns with factual knowledge encoded in the LMs pre-trained on large unstructured corpora. Each fact has five components: subject-type, subject, relation-pattern, object-type and object. The verifying procedure may be performed based on the five components.

Following strategies may be used for verifying candidate instances, as taken alone or in combination.

- Factifying subject-object types: Check if the object-type of a candidate instance match with the type of 'fill-in-the-MASK' value predicted by the language model (e.g., BERT). If match, then the instance is non-noisy.
- Factifying object mentions: Check if the object of a candidate instance match with the 'fill-in-the-MASK' value predicted by the language model (e.g., BERT). If match, then the instance is non-noisy.
- Factifying relation-pattern: Check if the relation-expression of a candidate instance match with the 'fill-in-the-MASK' value predicted by the language model (e.g., BERT). If match, then the instance is non-noisy.

According to the present disclosure, a semantic drift problems in bootstrapping relation extraction may be minimized and therefore, precise knowledge without human-in-the-loop can be extracted efficiently.

Also, human efforts in guiding machine learning systems may be reduced, data annotation time and budget may be saved.

Also, data annotations are not required. It is a very-weakly supervised system to precisely extract relations.

Also, it may be optimized for supply-chain services by precisely extracting relevant information/knowledge about suppliers, profiling suppliers, risk involved, technologies supplied, etc. Given that a consumer company recognizes a failure of the supplier in a good time, the consumer can switch to another supplier in order to save costs. Experts believe that the production and logistics costs can be reduced by 5 to 10 percent.

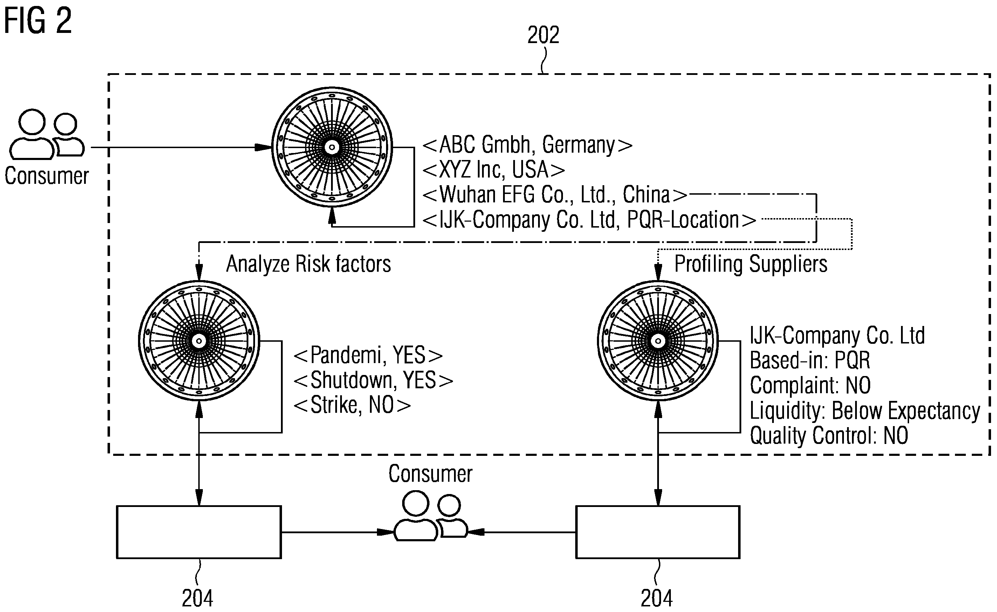

Fig. 2 shows an example of procedures performed by information extraction engine 202. The information extraction engine 202 may be configured to perform relation extraction, RE. Moreover, the information extraction engine 202 may be configured to perform bootstrapping relationships. Therefore, the information extraction engine 202 may precisely extract relevant information from a query in form of triples that are used to populate and build industrial knowledge graph.

The information extraction engine 202 is used for, for example, automatic analysis of supply chain management services, automatic fault diagnosis and monitoring system in turbine and industrial equipments by analyzing service reports, or automatic industrial knowledge graph construction. The extracted information is further used in predictive maintenance and business intelligence.

According to an example of the present disclosure, a customer inputs at least one query. The query may be used to extract relevant information hidden in industrial corpora or www(internet). In Fig. 2, two queries may be provided by the consumer. A first query may be 'Who are the best suppliers of Thermocouples Technology?', and a second query may be 'What are the risks for technologies supplied/manufactured by the supplier?'. The first query may be considered as including a first entity, i.e. Thermocouples Technology, and relationship information, i.e. supplier-of. The second query may be considered as including a first entity, i.e. 'technologies supplied/manufactured by the supplier', and relationship information, i.e. risk.

First, the information extraction engine 202 may search for list of suppliers. For example, the suppliers may be ABC Gmbh, XYZ Inc, Wuhan EFG Co. Ltd, IJK Company Co. Ltd, etc. Second, the information extraction engine 202 may organize a seed instance in form of triple, e.g. a first entity, a second entity, and relationship information between the first entity and the second entity.

The information extraction engine 202 may perform bootstrapping to extract all fact in form of triple (e.g. subject, relationship, object) for a specific relationship using seed instance. This procedure according to the present disclosure provides enhancement of the bootstrapping.

In Fig. 2, regarding the first query, a semantic of relationship 'best supplier-of' may be extended to 'based in', 'complaint', 'Liquidity', 'Quality control', etc. Thus, the information extraction engine may search for information corresponding to the extended semantic relationship. For example, the information may include 'Based-in', 'complaint', 'Liquidity', 'Quality control' for supplier 'IJK-Company Co. Ltd'.

Also, regarding second query, a semantic of relationship 'risk' may be extended to 'Pandemic', 'Shutdown', 'Strike', etc. Thus, the information extraction engine may search for information corresponding to the extended semantic relationship. For example, the information may include 'Pandemic', 'Shutdown', 'Strike' for supplier 'Wuhan EFG Co., Ltd'.

The extracted information is then forwarded to monitoring system 204. The monitoring system 204 may suggest a business decision based on the forwarded information.

In one example, with the extracted information in response to the first query, the monitoring system 204 may suggest the customer to switch supplier. More specifically, the monitoring system 204 may suggest business decisions based on the extracted information which represents that the supplier has 'below Expectancy' for extended semantic relationship 'Complaint', and 'No' for extended semantic relationship 'Quality Control'.

In another example, with the extracted information in response to the second query, the monitoring system 204 may suggest the customer to switch supplier. Further, monitoring system 204 may propose to deprecate including the supplier into supply-chain. More specifically, the monitoring system 204 may suggest business decisions based on extracted information which represents that the supplier has 'Yes' for extended semantic relationship 'Pandemic', and 'Yes' for extended semantic relationship 'Shutdown'.

In this manner, the customer make business decision efficiently in various field based on automatically extracted precise information. Furthermore, the cost for production or logistics may be reduced with help of the information extraction engine 202.

Although the information extraction engine 202 and the monitoring system 204 are illustrated as separated device, but the monitoring system 204 may be also included in information extraction engine 204.

According to the present disclosure, at least one following advantage may be achieved.

- It may minimize semantic drift problems in bootstrapping relation extraction and therefore, extract precise knowledge without human-in-the-loop efficiently.
- It may reduce human efforts in guiding machine learning systems and therefore, save data annotation time and budget.
- It may not require data annotations. It is a very-weakly supervised system to precisely extract relations.
- It may optimize supply-chain services by precisely extracting relevant information/knowledge about suppliers, profiling suppliers, risk involved, technologies supplied, etc. Given that a consumer company recognizes a failure of the supplier in a good time, the consumer can switch to another supplier in order to save costs. Experts believe that the production and logistics costs can be reduced by 5 to 10 percent.

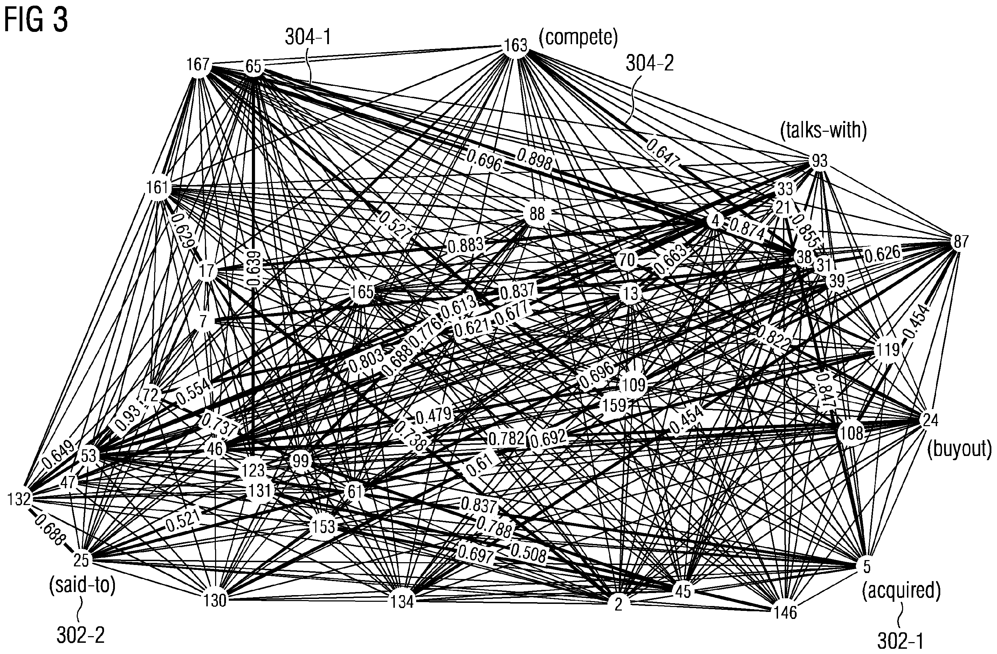

Fig. 3 shows an example of spanning tree. In Fig. 3, the spanning tree includes a plurality of nodes 302-1, 302-2, a plurality of edges 304-1, 304-2. Each of the nodes 302-1, 302-2 represents corresponding extraction pattern, for example, acquired, buyout, talks-with, compete, said-to, etc. Each of edges 304-1, 304-2 represents similarity between connected nodes. For example, a length of each edge 304-1, 304-2 may be proportional to the similarity values between connected nodes.

In this example, there are 167 nodes in total, while 40 nodes with confidence above 0.70. Here, a complete graph, G has been computed based on those 40 nodes.

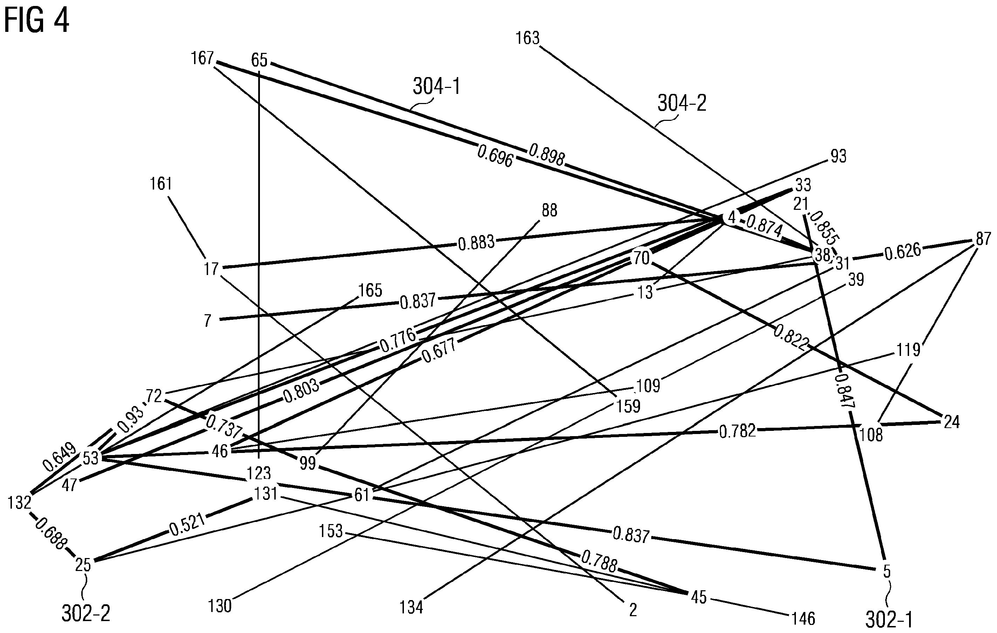

Fig. 4 to Fig. 6 shows an example of rectifying extraction patterns on the spanning tree.

Fig. 4 shows an example of rectifying extraction patterns on the spanning tree under condition of 'node degree = 1'. The node degree indicates the number of edges connecting to neighbor nodes. In fig. 4, the nodes whose node degree equal to 1 may be deleted. The deleted edges are illustrated as normal edges, whereas the remained edges are illustrated as highlighted edges. Therefore, the highlighted edges indicate existing connections between nodes after pruning and the nodes in the pruned graph suggests the non-noisy patterns. In this example, the node 302-1 and node 302-2 are still remained with connected edges. Also, the edge 304-1 is still remained in the spanning tree, and the edge 304-2 has been removed.

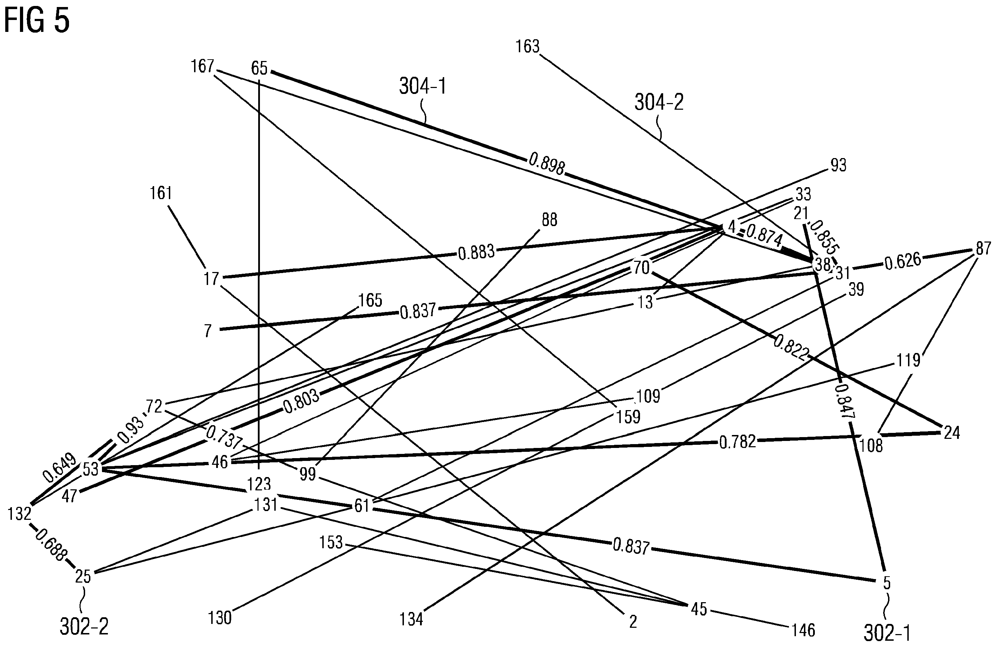

Fig. 5 shows an example of rectifying extraction patterns on the spanning tree under condition of 'nodes degree = 2' and 'Strategy=pruneNodeMin'. That is, an edge with minimum similarity value for a node whose node degree equals to 2 may be further deleted. In fig. 5, the highlighted edges indicate existing connections between nodes after pruning and the nodes in the pruned graph suggests the non-noisy patterns. In this example, the node 302-1 and node 302-2 are still remained with connected edges. Also, the edge 304-1 is still remained in the spanning tree.

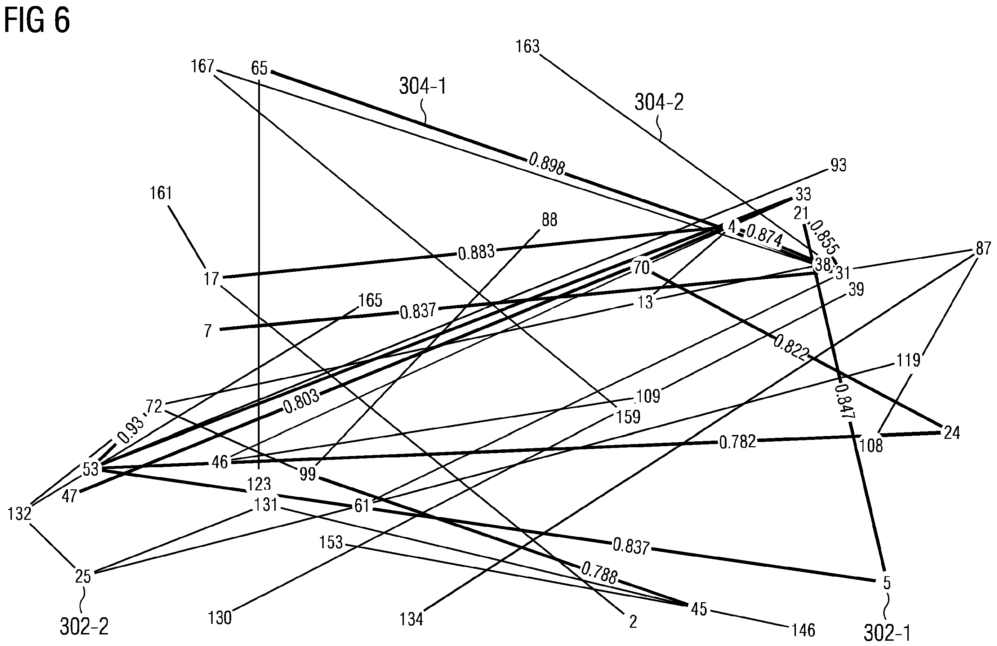

Fig. 6 shows an example of rectifying extraction patterns on the spanning tree under condition of 'nodes degree >= 1' and 'Strategy=pruneNodeMin'. That is, an edge with minimum similarity value for a node whose node degree equals to (or above) 1 may be deleted. In fig. 6, the highlighted edges indicate existing connections between nodes after pruning and the nodes in the pruned graph suggests the non-noisy patterns. In this example, the node 302-1 is still remained and node 302-2 is removed. Also, the edge 304-1 is still remained in the spanning tree. More specifically, as shown in Fig. 6, it may be observed that there are 22 noisy extraction patterns out of 40. The noisy extraction patterns (IDs) are: [13, 25, 38, 45, 61, 65, 87, 88, 93, 99, 108, 123, 130, 131, 132, 134, 146, 153, 159, 161, 163, 165, 167]. The noisy extraction pattern may be detected by pruning the nodes without highlighted edges, and the dense nodes remain in the pruned graph, suggesting the non-noisy extraction patterns.

Fig. 7 shows examples of verifying strategies using pre-trained language models. For verifying strategies, a sentence corresponding to a candidate instance in form of triple (subject, relation-pattern, object) may be used. The sentence may include the subject, relation-pattern and object of the candidate instance. In this example, the subject is Siemens, the relation-pattern is 'manufactures', and the object is 'gas turbines'. The verifying procedure may be performed based on five components, e.g. subject-type, subject, relation-pattern, object-type and object. The type may be one of the types of entities included in instances. The type of words (a word predicted by LM or a missing element) may be a category including a plurality of words. That is, the type may be a superordinate concept which includes a certain category of words. The type may be defined based on meanings of the words. For example, the type of words may be a product, an organization, technology, etc.

The sentence in this example may be 'Siemens maufactures gas turbines'. The sentence may be processed to include a mask on one of the words. The language model, LM, may perform a task which requires to fill the mask value. The predicted word by LM may be referred to as 'fill-in-the-MASK' value.

In the present disclosure, the LM may be Bidirectional Encoder Representations from Transformers (BERT), which is a technique for NLP (Natural Language Processing) pre-training developed by Google. Or, the LM may be RoBERT language model enhanced based on BERT.

In a first example, the processed sentence may be 'Siemens manufactures gas [MASK]'. The fill-in-the-Mask value by LM may be 'turbines', 'engines' and 'station'. It may be checked if the object type of the candidate instance matches with the type of 'fill-in-the-MASK' value. If it matches, then it is determined that the candidate instance is not noisy. Furthermore, it may be checked if the object of the candidate instance match with the 'fill-in-the-MASK' value predicted by LM. If it matches, then it is determined that the candidate instance is not noisy. Non-noisy means that the specific extraction pattern corresponding the candidate instance has the same semantics as the relationship information of the seed instance.

In a second example, the processed sentence may be 'Siemens [MASK] gas turbines'. The fill-in-the-Mask value by LM may be 'designed', 'produces', 'integrated' and 'manufactures'. It may be checked if the object type of the relation-expression of a candidate instance matches with the 'fill-in-the-MASK' value predicted by the LM. If it matches, the candidate instance is non-noisy.

Fig. 8 shows an apparatus 100 according to an embodiment of the second aspect of the present invention, i.e. an apparatus for enhancing reliability of bootstrapping for information extraction. In particular, the apparatus 100 is configured to perform the method according to any embodiment of the first aspect of the present invention, in particular the method as described in the foregoing with respect to Fig. 1 through Fig. 7.

The apparatus 100 comprises an input interface 110 for receiving an input signal 71, wherein the task is to performing the bootstrapping. The input interface 100 may be realized in hard- and/or software and may utilize wireless or

# EP 4 176 370 B1

wire-bound communication. For example, the input interface 110 may comprise an Ethernet adapter, an antenna, a glass fiber cable, a radio transceiver and/or the like.

The apparatus 100 further comprises a computing device 120 configured to perform the steps S10 through S80. The computing device 120 may in particular comprise one or more central processing units, CPUs, one or more graphics processing units, GPUs, one or more field-programmable gate arrays FPGAs, one or more application-specific integrated circuits, ASICs, and or the like for executing program code. The computing device 120 may also comprise a non-transitory data storage unit for storing program code and/or inputs and/or outputs as well as a working memory, e.g. RAM, and interfaces between its different components and modules.

The apparatus may further comprise an output interface 140 configured to output an output signal 72, for example as has been described with respect to step S90 in the foregoing. The output signal 72 may have the form of an electronic signal, as a control signal for a display device 200 for displaying the semantic relationship visually, as a control signal for an audio device for indicating the determined semantic relationship as audio and/or the like. Such a display device 200, audio device or any other output device may also be integrated into the apparatus 100 itself.

Fig. 9 shows a schematic block diagram illustrating a computer program product 300 according to the third aspect of the present invention, i.e. a computer program product 300 comprising executable program code 350 configured to, when executed (e.g. by the apparatus 100), perform the method according to the first aspect of the present invention, in particular the method as has been described with respect to Fig. 1 through Fig. 7 in the foregoing.

Fig. 10 shows a schematic block diagram illustrating non-transitory computer-readable data storage medium 400 according to the fourth aspect of the present invention, i.e. a data storage medium 400 comprising executable program code 450 configured to, when executed (e.g. by the apparatus 100), perform the method according to the first aspect of the present invention, in particular the method as has been described with respect to Fig. 1 through Fig. 7 in the foregoing.

In the foregoing detailed description, various features are grouped together in the examples with the purpose of streamlining the disclosure. It is to be understood that the above description is intended to be illustrative and not restrictive. It is intended to cover all alternatives, modifications and equivalence. Many other examples will be apparent to one skilled in the art upon reviewing the above specification, taking into account the various variations, modifications and options as described or suggested in the foregoing.

## Claims

1. A computer-implemented method for enhancing reliability of bootstrapping for information extraction, IE, by an information extraction engine (202) configured to perform the relation extraction RE, comprising at least the steps of:

   performing (S10) relation extraction, RE, to acquire a seed instance including a pair of entities and relationship information between the pair of entities;
   finding (S20) seed occurrences which match to the seed instance in a document collection;
   generating (S30) a set of extraction patterns corresponding to the relationship information by clustering the seed occurrences, wherein each of the extraction patterns is mapped to one of clusters of the seed occurrences;
   generating (S40) a graph which represents similarity between the extraction patterns based on word embedding vectors for each of the extraction patterns;
   identifying (S50) at least one noisy extraction pattern among the set of the extraction patterns based on the similarity and a pre-defined threshold,; and
   rectifying (S60) the set of extraction patterns by removing the identified noisy extraction pattern from the graph, wherein
   the information extraction engine (202) is used for automatic analysis of supply chain management services, automatic fault diagnosis and monitoring system in turbine and industrial equipments,
   the extracted information is forwarded to a monitoring system.

2. The method of claim 1,
   wherein the word embedding vectors for each extraction pattern are generated based on a sum of results of embedding all words before the pair of entities, between the pair of entities, and/or after the pair of entities of seed occurrences included in a corresponding cluster in the document collection.

3. The method of claim 1 or 2,
   wherein the graph is a spanning tree including the extraction patterns connected by edges which does not configure a closed loop.

4. The method of claim 3,

wherein a length of each edge in the spanning tree is proportional to a similarity value of two extraction patterns which are connected by said edge.

5. The method of any of claims 1 to 4, wherein the step of identifying (S50) includes: if an extraction pattern has a similarity value to a neighbor extraction pattern connected to the extraction pattern which is below the pre-defined threshold, deciding that the extraction pattern is a noisy extraction pattern.

6. The method of any of claims 1 to 5, wherein the step of identifying (S50) includes: if an extraction pattern has an average of similarity values to at least two neighbor extraction patterns connected to the extraction pattern which is below the pre-defined threshold, deciding that the extraction pattern is a noisy extraction pattern.

7. The method of any of claims 1 to 6, wherein the step of identifying (S50) includes: if an extraction pattern has a maximum of similarity value to neighbor extraction patterns connected to the extraction pattern which is below the pre-defined threshold, deciding that the extraction pattern is a noisy extraction pattern.

8. The method of claim 7, wherein the step of identifying (S50) further includes: if the extraction pattern has a maximum of similarity value to a neighbor extraction pattern which is above the pre-defined threshold, and if the extraction pattern has a similarity value to a neighbor extraction pattern which is below the pre-defined threshold, removing an edge corresponding to the similarity value below the pre-defined threshold.

9. The method of any of claims 1 to 8, further comprising:

comparing (S70) a candidate instance corresponding to a specific extraction pattern included in the rectified set with a word, which is predicted by a language model, LM, based on a portion of the candidate instance; and determining (S80) that the specific extraction pattern has same semantics as the relationship information of the seed instance in case the word predicted by the LM matches to another portion of the candidate instance.

10. The method of claim 9, wherein the word predicted by LM is at least one of:

- a first entity of the candidate instance,
- a second entity of the candidate instance, and/or
- the specific extraction pattern corresponding to the candidate instance.

11. The method of claim 9 or 10, wherein the step of determining (S80) includes deciding that the word predicted by the LM matches to another portion of the candidate instance in case a type of the word predicted by the LM is identical to a type of another portion of the candidate instance.

12. The method of any of claims 9 to 11, wherein the LM is pre-trained by unstructured corpora such that the LM is equipped with a function of predicting the word based on the portion of the candidate instance.

13. An apparatus (100) configured to perform the method according to any of claims 1 to 12.

14. A computer program product (300) comprising executable program (350) code configured to, when executed, perform the method according to any of claims 1 to 12.

15. A non-transitory computer-readable data storage medium (400) comprising executable program code (450) configured to, when executed, perform the method according to any of claims 1 to 12.


**Patentansprüche**

1. Ein computergestütztes Verfahren zur Verbesserung der Zuverlässigkeit des Bootstrapping für die Informationsextraktion (IE) durch eine Informationsextraktionsmaschine (202), die zur Durchführung der Relationsextraktion (RE) ausgelegt ist, umfassend mindestens die folgenden Schritte:

EP 4 176 370 B1

Durchführen (S10) einer Relationsextraktion (RE), um eine Startinstanz zu erfassen, die ein Paar von Entitäten und

Beziehungsinformationen zwischen dem Paar von Entitäten umfasst;

Finden (S20) von Startvorkommen, die mit der Startinstanz in einer Dokumentensammlung übereinstimmen;

Erzeugen (S30) einer Anzahl von Extraktionsmustern, die den Beziehungsinformationen entsprechen, durch Clustering der Startvorkommen, wobei jedes der Extraktionsmuster einem der Cluster der Startvorkommen zugeordnet wird;

Erzeugen (S40) eines Graphen, der die Ähnlichkeit zwischen den Extraktionsmustern basierend auf Wort-Einbettungsvektoren für jedes der Extraktionsmuster darstellt;

Identifizieren (S50) mindestens eines verrauschten Extraktionsmusters aus der Anzahl der Extraktionsmuster auf Basis der Ähnlichkeit und eines vordefinierten Schwellenwerts; und

Korrigieren (S60) der Anzahl von Extraktionsmustern durch Entfernen des identifizierten verrauschten Extraktionsmusters aus dem Graphen,

wobei

die Informationsextraktionsmaschine (202) für automatische Analyse- oder Lieferkettenmanagementdienste, automatische Fehlerdiagnose und Überwachungssysteme in Turbinen und Industrieanlagen verwendet wird, die extrahierten Informationen an ein Überwachungssystem weitergeleitet werden.

2. Verfahren nach Anspruch 1, wobei die Wort-Einbettungsvektoren für jedes Extraktionsmuster basierend auf einer Summe der Ergebnisse der Einbettung aller Wörter vor dem Paar von Entitäten, zwischen dem Paar von Entitäten und/oder nach dem Paar von Entitäten von Startvorkommen, die in einem entsprechenden Cluster in der Dokumentensammlung enthalten sind, erzeugt werden.

3. Verfahren nach Anspruch 1 oder 2,
wobei der Graph ein Spannbaum ist, der die Extraktionsmuster umfasst, die durch Kanten verbunden sind, die keine geschlossene Schleife bilden.

4. Verfahren nach Anspruch 3,
wobei die Länge jeder Kante im Spannbaum proportional zu einem Ähnlichkeitswert zweier Extraktionsmuster ist, die durch die Kante verbunden sind.

5. Verfahren nach einem der Ansprüche 1 bis 4,
wobei das Identifizieren (S50) umfasst:

Entscheiden, dass das Extraktionsmuster ein verrauschtes Extraktionsmuster ist, wenn ein Extraktionsmuster einen Ähnlichkeitswert zu einem benachbarten Extraktionsmuster aufweist, das mit dem Extraktionsmuster verbunden ist und
unterhalb des vordefinierten Schwellenwerts liegt.

6. Verfahren nach einem der Ansprüche 1 bis 5,
wobei das Identifizieren (S50) umfasst:
Entscheiden, dass ein Extraktionsmuster ein verrauschtes Extraktionsmuster ist, wenn das Extraktionsmuster einen Durchschnitt von Ähnlichkeitswerten zu mindestens zwei benachbarten Extraktionsmustern aufweist, die mit dem Extraktionsmuster verbunden sind, der unter dem vordefinierten Schwellenwert liegt.

7. Verfahren nach einem der Ansprüche 1 bis 6,
wobei das Identifizieren (S50) umfasst:
Entscheiden, dass ein Extraktionsmuster ein verrauschtes Extraktionsmuster ist, wenn das Extraktionsmuster einen maximalen Ähnlichkeitswert zu benachbarten Extraktionsmustern aufweist, die mit dem Extraktionsmuster verbunden sind, der unter dem vordefinierten Schwellenwert liegt.

8. Verfahren nach Anspruch 7,
wobei das Identifizieren (S50) ferner umfasst: wenn das Extraktionsmuster einen maximalen Ähnlichkeitswert zu einem benachbarten Extraktionsmuster aufweist, der über dem vordefinierten Schwellenwert liegt, und wenn das Extraktionsmuster einen Ähnlichkeitswert zu einem benachbarten Extraktionsmuster aufweist, der unter dem vordefinierten Schwellenwert liegt, Entfernen einer Kante, die dem Ähnlichkeitswert unterhalb des vordefinierten Schwellenwerts entspricht.

14

**9.** Verfahren nach einem der Ansprüche 1 bis 8, ferner umfassend:

Vergleichen (S70) einer Kandidateninstanz, die einem spezifischen Extraktionsmuster entspricht, das in der korrigierten Anzahl enthalten ist, mit einem Wort, das von einem Sprachmodell LM basierend auf einem Teil der Kandidateninstanz vorhergesagt wird; und
Feststellen (S80), dass das spezifische Extraktionsmuster dieselbe Semantik wie die Beziehungsinformation der Startinstanz hat, falls das vom LM vorhergesagte Wort mit einem anderen Teil der Kandidateninstanz übereinstimmt.

**10.** Verfahren nach Anspruch 9,
wobei das von LM vorhergesagte Wort mindestens eines der folgenden ist:

- eine erste Entität der Kandidateninstanz,
- eine zweite Entität der Kandidateninstanz und/oder
- das spezifische Extraktionsmuster, das der Kandidateninstanz entspricht.

**11.** Verfahren nach Anspruch 9 oder 10,
wobei das Bestimmen (S80) das Entscheiden umfasst, dass das von LM vorhergesagte Wort mit einem anderen Teil der Kandidateninstanz übereinstimmt, falls ein Typ des von LM vorhergesagten Wortes mit einem Typ eines anderen Teils der Kandidateninstanz identisch ist.

**12.** Verfahren nach einem der Ansprüche 9 bis 11,
wobei das LM durch unstrukturierte Korpora vortrainiert wird, so dass das LM mit einer Funktion zum Vorhersagen des Wortes basierend auf dem Teil der Kandidateninstanz ausgestattet ist.

**13.** Vorrichtung (100), die so eingerichtet ist, dass sie das Verfahren gemäß einem der Ansprüche 1 bis 12 ausführt.

**14.** Computerprogrammprodukt (300), das einen ausführbaren Programmcode (350) umfasst, der dazu ausgelegt ist, bei Ausführung der Programmcode (350) das Verfahren gemäß einem der Ansprüche 1 bis 12 ausführt.

**15.** Nicht-transitorisches, computerlesbares Datenspeichermedium (400), das einen ausführbaren Programmcode (450) umfasst, der dazu ausgelegt ist, bei Ausführung der Programmcode (450) das Verfahren gemäß einem der Ansprüche 1 bis 12 ausführt.

**Revendications**

**1.** Procédé mis en œuvre par ordinateur, destiné à améliorer la fiabilité d'amorçage pour l'extraction d'informations, IE, par un moteur d'extraction d'informations (202) configuré pour effectuer l'extraction de relations RE, comprenant au moins les étapes consistant à :

effectuer (S10) l'extraction de relations, RE, pour acquérir une instance de graine comportant une paire d'entités et des informations de relations entre la paire d'entités ;
trouver (S20) des occurrences de graine qui correspondent à l'instance de graine dans une collection de documents ;
générer (S30) un ensemble de motifs d'extraction correspondant aux informations de relations en regroupant les occurrences de graine, chacun des motifs d'extraction étant mis en correspondance avec l'un des regroupements des occurrences de graine ;
générer (S40) un graphe qui représente une similarité entre les motifs d'extraction sur la base de vecteurs de plongement lexical pour chacun des motifs d'extraction ;
identifier (S50) au moins un motif d'extraction affecté de bruit parmi l'ensemble des motifs d'extraction sur la base de la similarité et d'un seuil prédéfini ; et
rectifier (S60) l'ensemble de motifs d'extraction en retirant du graphe le motif d'extraction affecté de bruit identifié, dans lequel
le moteur d'extraction d'informations (202) est utilisé pour l'analyse automatique de services de gestion de la chaîne logistique, de système automatique de surveillance et de diagnostic des défauts dans les équipements industriels et de type turbine,
les informations extraites sont transférées à un système de surveillance.

**2.** Procédé selon la revendication 1,
dans lequel les vecteurs de plongement lexical pour chaque motif d'extraction sont générés sur la base d'une somme de résultats de plongement de tous les mots avant la paire d'entités, entre la paire d'entités et/ou après la paire d'entités d'occurrences de graine incluses dans un regroupement correspondant dans la collection de documents.

**3.** Procédé selon la revendication 1 ou 2,
dans lequel le graphe est un arbre couvrant comportant les motifs d'extraction reliés par des arêtes qui ne forment pas de boucle fermée.

**4.** Procédé selon la revendication 3,
dans lequel une longueur de chaque arête dans l'arbre couvrant est proportionnelle à une valeur de similarité de deux motifs d'extraction qui sont reliés par ladite arête.

**5.** Procédé selon l'une quelconque des revendications 1 à 4, dans lequel l'étape d'identification (S50) comporte : si un motif d'extraction présente une valeur de similarité avec un motif d'extraction voisin relié au motif d'extraction, qui est en dessous du seuil prédéfini, décider que le motif d'extraction est un motif d'extraction affecté de bruit.

**6.** Procédé selon l'une quelconque des revendications 1 à 5, dans lequel l'étape d'identification (S50) comporte : si un motif d'extraction présente une moyenne de valeurs de similarité avec au moins deux motifs d'extraction voisins reliés au motif d'extraction, qui est en dessous du seuil prédéfini, décider que le motif d'extraction est un motif d'extraction affecté de bruit.

**7.** Procédé selon l'une quelconque des revendications 1 à 6, dans lequel l'étape d'identification (S50) comporte : si un motif d'extraction présente un maximum de valeur de similarité avec des motifs d'extraction voisins reliés au motif d'extraction, qui est en dessous du seuil prédéfini, décider que le motif d'extraction est un motif d'extraction affecté de bruit.

**8.** Procédé selon la revendication 7, dans lequel l'étape d'identification (S50) comporte : si le motif d'extraction présente un maximum de valeur de similarité avec un motif d'extraction voisin, qui est au-dessus du seuil prédéfini, et si le motif d'extraction présente une valeur de similarité avec un motif d'extraction voisin, qui est en dessous du seuil prédéfini, retirer une arête correspondant à la valeur de similarité en dessous du seuil prédéfini.

**9.** Procédé selon l'une quelconque des revendications 1 à 8, comprenant en outre :

comparer (S70) une instance candidate correspondant à un motif d'extraction spécifique inclus dans l'ensemble rectifié avec un mot, qui est prédit par un modèle de langage, LM, sur la base d'une partie de l'instance candidate ; et
déterminer (S80) que le motif d'extraction spécifique présente une même sémantique que les informations de relations de l'instance de graine dans le cas où le mot prédit par le LM correspond à une autre partie de l'instance candidate.

**10.** Procédé selon la revendication 9,
dans lequel le mot prédit par LM est au moins l'un des éléments suivants :

- une première entité de l'instance candidate,
- une seconde entité de l'instance candidate et/ou
- le motif d'extraction spécifique correspondant à l'instance candidate.

**11.** Procédé selon la revendication 9 ou 10,
dans lequel l'étape de détermination (S80) comporte la décision selon laquelle le mot prédit par le LM correspond à une autre partie de l'instance candidate dans le cas où un type du mot prédit par le LM est identique à un type d'une autre partie de l'instance candidate.

**12.** Procédé selon l'une quelconque des revendications 9 à 11, dans lequel le LM est pré-entrainé par des corpus non structurés de telle sorte que le LM est doté d'une fonction de prédiction du mot sur la base de la partie de l'instance candidate.

**13.** Appareil (100) configuré pour effectuer le procédé selon l'une quelconque des revendications 1 à 12.

**14.** Produit programme informatique (300) comprenant du code de programme (350) exécutable configuré pour, quand il est exécuté, effectuer le procédé selon l'une quelconque des revendications 1 à 12.

**15.** Support de stockage de données (400) non volatil lisible par ordinateur comprenant du code (450) de programme exécutable configuré pour, quand il est exécuté, effectuer le procédé selon l'une quelconque des revendications 1 à 12.

# FIG 1

# FIG 2

202

Consumer

<ABC Gmbh, Germany>
<XYZ Inc, USA>
<Wuhan EFG Co., Ltd., China>
<IJK-Company Co. Ltd, PQR-Location>

Analyze Risk factors

Profiling Suppliers

<Pandemi, YES>
<Shutdown, YES>
<Strike, NO>

IJK-Company Co. Ltd
Based-in: PQR
Complaint: NO
Liquidity: Below Expectancy
Quality Control: NO

Consumer

204

204

EP 4 176 370 B1

FIG 3

FIG 4

FIG 5

FIG 6

EP 4 176 370 B1

**FIG 7**

<subject: Siemens, type: organization> manufactures gas <object: turbines, type: product>.

Siemens manufactures gas [MASK].

Language Models as Factifier

(Task: Fill MASK value)

Siemens manufactures gas [turbines].
Siemens manufactures gas [engines].
Siemens manufactures gas [stations].

Named Entity-Recognizer

turbines → product
engines → product
station → other

Match object-type & vote ✓

Factify object-type

Factify object

Match object in top-k ✓

Siemens [MASK] gas turbines.

Language Models as Factifier

(Task: Fill VERB in MASK)

Siemens [designed] gas turbines.
Siemens [produces] gas turbines.
Siemens [integrated] gas turbines.
Siemens [manufactures] gas turbines.

Match relation expression ✓

Factify realation-pattern

EP 4 176 370 B1

FIG 8

FIG 9

FIG 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018082183 A1

### Non-patent literature cited in the description

- **SALTON** ; **BERKELY et al.** Term-weighting approaches in automatic text retrieval. *Information Processing and Management*, 1988
- **BRIN et al.** Extracting Patterns and Relations from the World Wide Web. *Selected Papers from the International Workshop on The World Wide Web and Database*, 1999
- **AGICHTEIN** ; **GRAVANO et al.** Snowball: Extracting Relations from Large Plain-Text Collections. *Processings of the ACM Conference on Digital Libraries*, 2000
- **GUPTA et al.** Joint Bootstrappong Machines for High Confidence Relation Extraction. *NAACL*, 2018
- **JACOB DEVLIN et al.** BERT: Pre-training of Deep Didirectional Transformers for Language Understanding. *NAACL*, 2019
- **LIU et al.** *RoBERTa: A Robustly Optimized BERT Pretraining Approach*, 2019
- **PETRONI et al.** Language Models as Knowledge Based?. *EMLP*, 2019